# EUROPEAN PATENT APPLICATION

(11) **EP 4 661 530 A1**
(43) Date of publication of application: **10.12.2025**
(21) Application number: 24755950.3
(22) Date of filing: 29.01.2024
(51) Int. Cl.: H04W 64/00

(54) **COMMUNICATION METHOD AND APPARATUS, AND STORAGE MEDIUM AND COMPUTER PROGRAM PRODUCT**

(30) Priority: 17.02.2023 CN 202310165345
(71) Applicant: Huawei Technologies Co., Ltd., Shenzhen, Guangdong 518129 (CN)
(72) Inventor: WANG, Han, Shenzhen, Guangdong 518129 (CN); HUANG, Su, Shenzhen, Guangdong 518129 (CN)
(74) Representative: Goddar, Heinz J.
(86) International application number: PCT/CN2024/074427
(87) International publication number: WO 2024/169576

(57) **Abstract**

A communication method, an apparatus, a storage medium, and a computer program product are provided. The method includes: A terminal device receives first configuration information from a network device, where the first configuration information includes configuration information of at least one first non-cell-defining synchronization signal/physical broadcast channel block NCD-SSB and configuration information of a first reference signal, the at least one first NCD-SSB is associated with the first reference signal, and the first reference signal is used to position the terminal device. The terminal device measures the at least one first NCD-SSB, and determines a sending parameter of the first reference signal. In this way, when the terminal device is in different cells, the terminal device may measure first NCD-SSBs of the different cells at a same frequency domain position, and then determine the sending parameter of the first reference signal based on a measurement result, so that an additional neighboring cell search process can be avoided, and power consumption of the terminal device can be reduced.

## Description

### CROSS-REFERENCE TO RELATED APPLICATIONS

This application claims priority to Chinese Patent Application No. 202310165345.1, filed with the China National Intellectual Property Administration on February 17, 2023 and entitled "COMMUNICATION METHOD, APPARATUS, STORAGE MEDIUM, AND COMPUTER PROGRAM PRODUCT", which is incorporated herein by reference in its entirety.

### TECHNICAL FIELD

This application relates to the field of positioning technologies, and in particular, to a communication method, an apparatus, a storage medium, and a computer program product.

### BACKGROUND

Currently, when uplink positioning or uplink/downlink positioning is performed on a terminal device in a radio resource control (radio resource control, RRC) inactive (inactive) state, to avoid frequent RRC connections when a sounding reference signal (sounding reference signal, SRS) resource is configured for the terminal device, an SRS resource used for positioning the terminal device is configured in a plurality of cells.

When the terminal device is located in a user-centric positioning area (user equipment-centric positioning area, UCPA), regardless of whether the terminal device performs cell handover, same SRS resources are used for sending. A sending parameter of an SRS may be obtained by measuring an SSB signal of a current cell, and different cells correspond to different SSB indexes (indexes). When the terminal device moves from one cell (the current cell) to another cell (a target cell) in the UCPA, the terminal device frequently performs neighboring cell search, to find an SSB of the target cell. This process increases power consumption of the terminal device and causes high power consumption.

### SUMMARY

Embodiments of this application provide a communication method, an apparatus, a storage medium, and a computer program product, to reduce power consumption of a terminal in a positioning process.

According to a first aspect, this application provides a communication method. The method may be performed by a first communication apparatus, and the first communication apparatus may be a terminal device or a unit, a module, or a chip (system) in a terminal device. The following provides descriptions by using an example in which the first communication apparatus is the terminal device.

In this application, the terminal device receives first configuration information from a network device. The first configuration information includes configuration information of at least one first non-cell-defining synchronization signal/physical broadcast channel block NCD-SSB and configuration information of a first reference signal, the at least one first NCD-SSB is associated with the first reference signal, and the first reference signal is used to position the terminal device. The terminal device measures the at least one first NCD-SSB, and determines a sending parameter of the first reference signal.

The first configuration information received by the terminal device includes the configuration information of the at least one first NCD-SSB and the configuration information of the first reference signal, and the at least one first NCD-SSB is associated with the first reference signal. If different cells still correspond to different CD-SSBs, the first reference signal needs to be associated with CD-SSBs of different cells, and a UE needs to frequently search for the CD-SSBs when the UE is in the different cells. Consequently, power consumption of the UE is high. However, in this application, when the terminal device is in different cells, the terminal device may measure first NCD-SSBs of the different cells at a same frequency domain position, and then determine the sending parameter of the first reference signal based on a measurement result, so that an additional neighboring cell search process can be avoided, and power consumption of the terminal device can be reduced.

In a possible implementation, the at least one first NCD-SSB corresponds to at least one cell. In this way, the at least one cell sends a same first NCD-SSB, and different cells in the at least one cell correspond to the same NCD-SSB. The terminal device may measure the first NCD-SSBs of the different cells at the same frequency domain position, so that the additional neighboring cell search process in the at least one cell can be avoided, and the power consumption of the terminal device can be reduced.

In a possible implementation, the at least one first NCD-SSB corresponds to one positioning area. In other words, a same first NCD-SSB is configured for one positioning area. When the terminal device performs cell reselection in the positioning area, the terminal device may measure first NCD-SSBs of different cells at a same frequency domain position, so that an additional neighboring cell search process in the positioning area can be avoided, and power consumption of the terminal device can be reduced.

In a possible implementation, the at least one first NCD-SSB corresponds to at least one transmit beam of a same cell, the at least one first NCD-SSB is sent in a beam sweeping manner, and the at least one first NCD-SSB may be sent in a time division multiplexing manner. One transmit beam may correspond to one first NCD-SSB. In this way, energy may be concentrated in one transmit beam direction at a moment, and a first NCD-SSB signal in the transmit beam direction can be sent farther.

In a possible implementation, the sending parameter of the first reference signal includes at least one of the following: whether to send the first reference signal; a transmit power of the first reference signal; and transmit timing of the first reference signal. Whether to send the first reference signal is determined based on an RSRP of the at least one first NCD-SSB, in other words, RSRP-based validation of an SRS is determined based on the at least one first NCD-SSB. If the RSRP of the at least one first NCD-SSB is less than a threshold, an SRS corresponding to the first NCD-SSB is not to be sent. The transmit timing of the first reference signal may be determined in the following manner: determining downlink reference timing based on the first NCD-SSB, and applying an uplink timing advance to the downlink reference timing, to determine the transmit timing of the SRS.

In a possible implementation, the transmit power of the first reference signal is determined based on the RSRP of the at least one first NCD-SSB. For example, when the first reference signal is associated with one first NCD-SSB, the transmit power of the first reference signal is determined based on the first NCD-SSB associated with the first reference signal. When the first reference signal is associated with a plurality of first NCD-SSBs, the transmit power of the first reference signal is determined based on the plurality of first NCD-SSBs associated with the first reference signal. For example, the transmit power of the first reference signal is determined based on an average value of RSRPs of the plurality of first NCD-SSBs. For another example, the transmit power of the first reference signal is determined based on a largest value of RSRPs of the plurality of first NCD-SSBs. In this way, when one reference signal is associated with at least one first NCD-SSB, a manner of determining the transmit power of the first reference signal may be provided for the terminal device.

In a possible implementation, the first configuration information further includes configuration information of a second reference signal, the at least one first NCD-SSB is further associated with the second reference signal, and the second reference signal is used to position the terminal device. In this manner, the at least one first NCD-SSB may be associated with the first reference signal and the second reference signal, and both the first reference signal and the second reference signal may be determined based on a measurement result of the at least one first NCD-SSB.

In a possible implementation, the configuration information of the first NCD-SSB includes at least one of the following: a frequency, a sending periodicity, and a positioning area identifier of the first NCD-SSB. In this manner, the terminal device performs downlink synchronization on the first NCD-SSB and measures the first NCD-SSB based on the configuration information of the first NCD-SSB.

In a possible implementation, the terminal device may further receive second configuration information of the network device. The second configuration information includes configuration information of at least one second NCD-SSB and configuration information of a third reference signal, the at least one second NCD-SSB is associated with the third reference signal, and the third reference signal is used to position the terminal device. The terminal device measures the at least one second NCD-SSB, and determines a sending parameter of the third reference signal. In this way, a plurality of groups of NCD-SSBs and reference signals may be configured for the positioning area.

According to a second aspect, this application provides a communication method. The method may be performed by a second communication apparatus, and the second communication apparatus may be a network device or a unit, a module, or a chip (system) in a network device. The following is described by using an example in which the second communication apparatus is the network device.

In this application, the network device obtains first configuration information. The first configuration information includes configuration information of at least one first non-cell-defining synchronization signal/physical broadcast channel block NCD-SSB and configuration information of a first reference signal, the at least one first NCD-SSB is associated with the first reference signal, and the first reference signal is used to position a terminal device. The network device sends the first configuration information to the terminal device.

The first configuration information sent by the network device to the terminal device includes the configuration information of the at least one first NCD-SSB and the configuration information of the first reference signal, and the at least one first NCD-SSB is associated with the first reference signal. If different cells still correspond to different CD-SSBs, the first reference signal needs to be associated with CD-SSBs of different cells, and a UE frequently searches for the CD-SSBs in the different cells. Consequently, power consumption of the UE is high. However, in this application, the at least one first NCD-SSB is associated with the first reference signal, so that when the terminal device is in different cells, the terminal device may measure first NCD-SSBs of the different cells at a same frequency domain position, and then determine the sending parameter of the first reference signal based on a measurement result. In this way, the terminal device can avoid an additional neighboring cell search process, and power consumption of the terminal device can be reduced.

In a possible implementation, the at least one first NCD-SSB corresponds to at least one cell. For related descriptions and beneficial effects, refer to related descriptions of the first aspect. Details are not described again.

In a possible implementation, the at least one first NCD-SSB corresponds to one positioning area. For related descriptions and beneficial effects, refer to related descriptions of the first aspect. Details are not described again.

In a possible implementation, the at least one first NCD-SSB corresponds to at least one transmit beam of a same cell, and the at least one first NCD-SSB is sent in a beam sweeping manner. For related descriptions and beneficial effects, refer to related descriptions of the first aspect. Details are not described again.

In a possible implementation, the sending parameter of the first reference signal includes at least one of the following: whether to send the first reference signal; a transmit power of the first reference signal; and transmit timing of the first reference signal. For related descriptions, refer to related descriptions of the first aspect. Details are not described again.

In a possible implementation, the transmit power of the first reference signal is determined based on an RSRP of the at least one first NCD-SSB. For related descriptions and beneficial effects, refer to related descriptions of the first aspect. Details are not described again.

In a possible implementation, the first configuration information further includes configuration information of a second reference signal, the at least one first NCD-SSB is further associated with the second reference signal, and the second reference signal is used to position the terminal device. For related descriptions, refer to related descriptions of the first aspect. Details are not described again.

In a possible implementation, the first configuration information includes at least one of the following: a frequency, a sending periodicity, and a positioning area identifier of the first NCD-SSB. For related descriptions, refer to related descriptions of the first aspect. Details are not described again.

In a possible implementation, the network device may further send second configuration information to the terminal device, where the second configuration information includes configuration information of at least one second NCD-SSB and configuration information of a third reference signal, the at least one second NCD-SSB is associated with the third reference signal, and the third reference signal is used to position the terminal device. In this way, a plurality of groups of NCD-SSBs and reference signals may be configured for the positioning area.

According to a third aspect, this application provides a communication apparatus. The communication apparatus may be the foregoing first communication apparatus or second communication apparatus. The communication apparatus may include a communication unit and a processing unit, to perform either the first aspect or the second aspect, or perform any one of the possible implementations of the first aspect and the second aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform either the first aspect or the second aspect, or perform any one of the possible implementations of the first aspect and the second aspect.

According to a fourth aspect, this application provides a communication apparatus. The communication apparatus may be the foregoing first communication apparatus or second communication apparatus. The communication apparatus may include a processor and a memory, to perform either the first aspect or the second aspect, or perform any one of the possible implementations of the first aspect and the second aspect. Optionally, a transceiver is further included. The memory is configured to store a computer program or instructions. The processor is configured to invoke the computer program or the instructions from the memory and run the computer program or the instructions. When the processor executes the computer program or the instructions in the memory, the communication apparatus is enabled to perform either the first aspect or the second aspect, or perform any one of the possible implementations of the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect, this application provides a communication apparatus. The communication apparatus may be the foregoing first communication apparatus or second communication apparatus. The communication apparatus may include a processor, to perform either the first aspect or the second aspect, or perform any one of the possible implementations of the first aspect and the second aspect. The processor is coupled to a memory. Optionally, the communication apparatus further includes the memory. Optionally, the communication apparatus further includes a communication interface, and the processor is coupled to the communication interface.

In an implementation, when the communication apparatus is the first communication apparatus or the second communication apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, this application provides a system. The system includes one or more first communication apparatuses.

In a possible implementation, the system may further include one or more second communication apparatuses. In another possible implementation, the system may further include one or more location management apparatuses.

According to a seventh aspect, this application provides a computer program product. The computer program product includes a computer program (which may also be referred to as code or instructions). When the computer program is run, a computer is enabled to perform either the first aspect or the second aspect, or perform any one of the possible implementations of the first aspect and the second aspect.

According to an eighth aspect, this application provides a computer-readable storage medium. The computer-readable storage medium stores a computer program (which may also be referred to as code or instructions). When the computer program is run on a computer, the computer is enabled to perform either the first aspect or the second aspect, or perform any one of the possible implementations of the first aspect and the second aspect.

According to a ninth aspect, this application provides a chip system. The chip system may include a processor. The processor is coupled to a memory, and may be configured to perform either the first aspect or the second aspect, or perform any one of the possible implementations of the first aspect and the second aspect. Optionally, the chip system further includes the memory. The memory is configured to store a computer program (which may also be referred to as code or instructions). The processor is configured to invoke the computer program from the memory and run the computer program, so that a device on which the chip system is installed performs either the first aspect or the second aspect or performs any one of the possible implementations of the first aspect and the second aspect.

According to a tenth aspect, this application provides a processing apparatus, including an interface circuit and a processing circuit. The interface circuit may include an input circuit and an output circuit. The processing circuit is configured to receive a signal through the input circuit, and transmit a signal through the output circuit, so that either the first aspect or the second aspect or any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a flip-flop, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a first communication apparatus or a second communication apparatus, the interface circuit may be a radio frequency processing chip in the first communication apparatus or the second communication apparatus, and the processing circuit may be a baseband processing chip in the first communication apparatus or the second communication apparatus.

In another implementation, the communication apparatus may be some components, for example, an integrated circuit product like a system chip or a communication chip, in the first communication apparatus or the second communication apparatus. The interface circuit may be an input/output interface, an interface circuit, an output circuit, an input circuit, a pin, a related circuit, or the like on the chip or a chip system. The processing circuit may be a logic circuit on the chip.

### BRIEF DESCRIPTION OF DRAWINGS

FIG. 1 is a diagram of an architecture of a communication system to which an embodiment of this application is applicable;
FIG. 2 is a diagram of an architecture of another communication system to which an embodiment of this application is applicable;
FIG. 3 is a diagram of an architecture of another communication system to which an embodiment of this application is applicable;
FIG. 4 is a diagram of an architecture of another communication system to which an embodiment of this application is applicable;
FIG. 5 is a diagram of an architecture of another communication system to which an embodiment of this application is applicable;
FIG. 6 is a diagram of an architecture of another communication system to which an embodiment of this application is applicable;
FIG. 7 is a schematic flowchart of a communication method according to an embodiment of this application;
FIG. 8 is a diagram of a positioning area to which an embodiment of this application is applicable;
FIG. 9 is a schematic flowchart of another communication method according to an embodiment of this application;
FIG. 10 is a diagram of another positioning area to which an embodiment of this application is applicable;
FIG. 11 is a schematic flowchart of another communication method according to an embodiment of this application;
FIG. 12 is a diagram of a structure of a communication apparatus according to an embodiment of this application;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

Before this application is described, some terms in embodiments of this application are first briefly explained and described, to help a person skilled in the art have a better understanding.

(1) A user-centric positioning area (UCPA) refers to a cell in which a user is currently located and one or more cells adjacent to the cell in which the user is located.

(2) Non-cell-defining synchronization signal/physical broadcast channel block NCD-SSB.

The NCD-SSB is referred to as a non-cell-defining SSB. The NCD-SSB does not include configuration information of a CORSET 0, and is mainly used for radio resource management (radio resource management, RRM). The NCD-SSB is different from a CD-SSB. The CD-SSB is referred to as a cell-defining SSB, and includes configuration information of an associated control resource set (control resource set, CORESET) 0 and configuration information of a monitoring occasion of Type 0-PDCCH CSS. A main function of the CORESET 0 is to define time and frequency resources of the type 0-physical downlink control channel common search space (type 0-physical downlink control channel common search space, Type 0-PDCCH CSS) and the monitoring occasion of the Type 0-PDCCH CSS. A UE searches for and schedules an NR PDCCH of an SIB1 NR PDSCH based on information about the CORESET 0 and the Type 0-PDCCH CSS, to demodulate and receive an SIB1, and further obtain a minimum system message needed for accessing a wireless network system.

### (3) Radio resource control (RRC) state.

A terminal device has three RRC states: an RRC connected (connected) state, an RRC idle (idle) state, and an RRC inactive (inactive) state.

RRC connected state (which may also be referred to as a connected state for short, where the "connected state" and the "RRC connected state" are a same concept and are interchangeable in this specification): The terminal device establishes an RRC connection to a network and can perform data transmission.

RRC idle state (which may also be referred to as an idle state for short, where the "idle state" and the "RRC idle state" are a same concept and are interchangeable in this specification): The terminal device does not establish the RRC connection to the network, and a base station does not store a context of the terminal device. If the terminal device needs to enter the RRC idle state from the RRC connected state, the terminal device needs to initiate an RRC connection establishment process.

RRC inactive state (which may also be referred to as an RRC non-activated state, or referred to as a non-activated state or an inactive state for short, where "deactive state", "non-activated state", "non-active state", "deactivated state", "inactive state", "RRC inactive state", and "RRC deactivated state" are a same concept and are interchangeable in this specification): The terminal device previously enters the RRC connected state at an anchor base station, and then the anchor base station releases the RRC connection, but stores the context of the terminal device. If the terminal device needs to re-enter the RRC connected state from the RRC inactive state, the terminal device needs to initiate an RRC connection resume process (or referred to as an RRC connection reestablishment process) at a base station on which the terminal device currently camps. Because the terminal device may be in a moving state, the base station on which the terminal device currently camps and the anchor base station of the terminal device may be a same base station, or may be different base stations. In comparison with the RRC establishment process, the RRC resume process has a shorter delay and lower signaling overheads. However, the base station needs to store the context of the terminal device, resulting in storage overheads of the base station.

(4) Terms "system" and "network" in embodiments of this application may be used interchangeably. The term "a plurality of" means two or more than two. The term "and/or" describes an association relationship for describing associated objects and represents that three relationships may exist. For example, A and/or B may represent the following three cases: Only A exists, both A and B exist, and only B exists. In addition, unless otherwise specified, the character "/" generally indicates an "or" relationship between the associated objects.

"At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit a sequence, a time sequence, priorities, or importance of the plurality of objects. For example, a first message and a second message are merely used to distinguish between different messages, and do not indicate different priorities, sending sequences, or importance of the two types of messages.

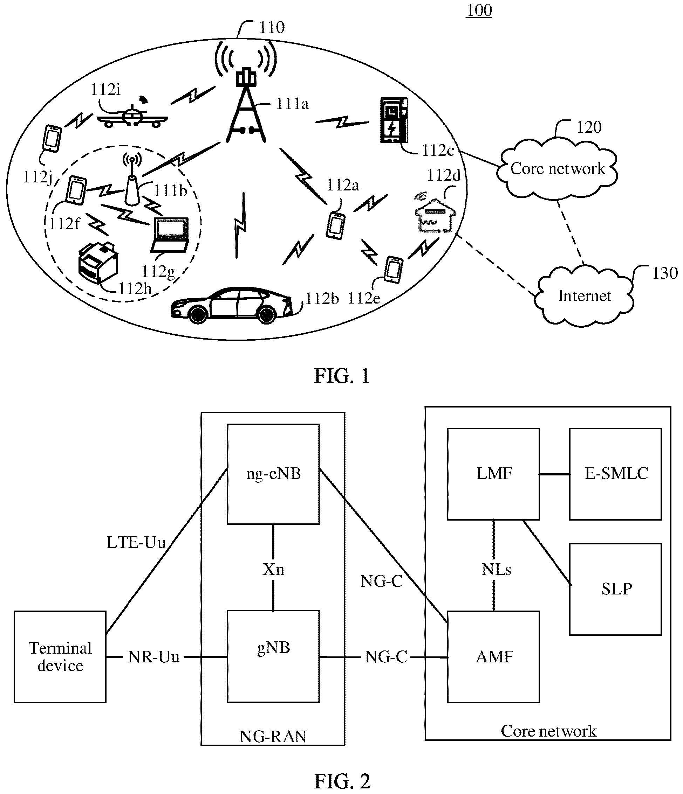

FIG. 1 is an example diagram of an architecture of a communication system 100 to which an embodiment of this application is applicable. As shown in FIG. 1, the communication system 100 includes a radio access network 110 and a core network 120. Optionally, the communication system 100 may further include the Internet 130. The radio access network 110 may include at least one radio access network device (for example, 111a and 111b in FIG. 1), and may further include at least one terminal device (for example, 112a to 112j in FIG. 1). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device may be integrated into one physical device. Any two terminal devices may be connected to each other in a wired or wireless manner, and any two radio access network devices may be connected to each other in a wired or wireless manner. It should be understood that FIG. 1 is only a diagram. The communication system 100 may further include another network device, for example, may further include a wireless relay device and a wireless backhaul device, which are not shown in FIG. 1.

The network device in embodiments of this application includes, for example, an access network (access network, AN) device. A next-generation radio access network (next-generation radio access network, NG-RAN) in embodiments of this application may include one or more access network devices. The access network device in the NG-RAN may also be referred to as a base station, a RAN node, or a RAN device. A network device in a V2X technology is a road side unit (road side unit, RSU). The RSU may be a fixed infrastructure entity that supports a V2X application, and may exchange messages with another entity that supports the V2X application. The network device is an entity that is on a network side and that is configured to transmit and/or receive a signal, and may be configured to perform mutual conversion between a received over-the-air frame and an internet protocol (internet protocol, IP) packet, and serve as a router between a terminal and a rest part of an access network. The rest part of the access network may include an IP network or the like. The network device may further coordinate attribute management of an air interface. For example, the network device may be an evolved NodeB (evolutional NodeB, eNB, or e-NodeB) in long term evolution (long term evolution, LTE). The eNB is an apparatus that is deployed in a radio access network and that meets a 4G standard and provides a wireless communication function for a terminal. The access network device may alternatively be a new radio controller (new radio controller, NR controller), a gNode B (gNB) in a 5G system, a central network element (central unit), a new radio base station, a radio remote module, a micro base station (also referred to as a small cell), a relay (relay), a distributed network element (distributed unit, DU), macro base stations in various forms, a transmission reception point (transmission reception point, TRP), a transmission measurement function (transmission measurement function, TMF), a transmission point (transmission point, TP), any other radio access device, or a base station in next-generation communication. However, embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to related technical specifications of the 3rd generation partnership project (3rd generation partnership project, 3GPP).

The radio access network device may be a macro base station (for example, 111a in FIG. 1), or may be a micro base station or an indoor station (for example, 111b in FIG. 1), or may be a relay node, a donor node, or the like. A specific technology and a specific device form that are used by the radio access network device are not limited in embodiments of this application. For ease of description, the following provides descriptions by using an example in which the base station is used as a radio access network device.

The terminal device in embodiments of this application may also be referred to as a terminal, a user equipment (user equipment, UE), a mobile station, a mobile terminal device, or the like, and is a device having a wireless transceiver function. The terminal device may communicate with a core network through a radio access network (radio access network, RAN), and exchange voice and/or data with the RAN. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart household device, a sensor, or the like. A specific technology and a specific device form that are used by the terminal device are not limited in embodiments of this application.

The terminal device may establish a connection to an operator network through an interface (for example, N1) provided by the operator network, to use services such as data and/or voice provided by the operator network. The terminal device may further access a domain name system (domain name system, DNS) through the operator network, to use an operator service deployed in the DNS and/or a service provided by a third party. The third party may be a service party except the operator network and the terminal device, and may provide services such as data and/or voice for the terminal device. A specific representation form of the third party may be specifically determined based on an actual application scenario, and is not limited herein.

The base station and the terminal device may be fixed or movable. The base station and the terminal device may be deployed on land, including an indoor device, an outdoor device, a handheld device, or a vehicle-mounted device; may be deployed on water; or may be deployed on an airplane, a balloon, and an artificial satellite in the air. Application scenarios of the base station and the terminal device are not limited in embodiments of this application.

Roles of the base station and the terminal device may be relative. For example, a helicopter or uncrewed aerial vehicle 112i in FIG. 1 may be configured as a mobile base station. For those terminal devices 112j accessing the radio access network 110 through 112i, the terminal device 112i is a base station. However, for the base station 111a, 112i is a terminal device. In other words, communication between 111a and 112i is performed according to a radio air interface protocol. Certainly, communication between 111a and 112i may alternatively be performed according to an interface protocol between base stations. In this case, for 111a, 112i is also a base station. Therefore, both the base station and the terminal device may be collectively referred to as communication apparatuses, 111a and 111b each in FIG. 1 may be referred to as a communication apparatus having a function of a base station, and 112a to 112j each in FIG. 1 may be referred to as a communication apparatus having a function of a terminal device.

Communication between the base station and the terminal device, between the base stations, or between the terminal devices may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal device may alternatively be performed by a module (for example, a chip or a modem) in the terminal device, or may be performed by an apparatus including the function of the terminal device.

The core network in embodiments of this application may include a network device that processes and forwards signaling and data of a user, for example, including core network devices such as an access and mobility management function (access and mobility management function, AMF), a session management function (session management function, SMF), a user plane gateway, and a location management device. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane network element functional entity (user plane function, UPF), is generally located on a network side. The AMF and the SMF are equivalent to a mobility management entity (mobility management entity, MME) in an LTE system. The AMF is mainly responsible for admission, and the SMF is mainly responsible for session management. Certainly, the core network may further include other network elements, which are not listed one by one herein.

The location management device has a positioning function. The location management device in embodiments of this application may include a location management function (location management function, LMF) or a location management component (location management component, LMC), or may be a local location management function (local location management function, LLMF) located in the network device. This is not limited in embodiments of this application. For ease of description, the following embodiments are described by using an example in which the location management device is an LMF.

Based on the content shown in FIG. 1, FIG. 2 is an example of a diagram of an architecture of a communication system to which an embodiment of this application is applicable. The communication system is shown by using positioning architectures in LTE and NR Rel-16 as an example. As shown in FIG. 2, involved network elements/modules mainly include three parts: a next-generation radio access network (NG-RAN), a terminal device, and a core network.

The core network includes a location management function (LMF), an access and mobility management function (AMF), a service location protocol (service location protocol, SLP), an evolved serving mobile location center (evolved serving mobile location center, E-SMLC), and the like. A positioning server, namely, the location management function (location management function, LMF), is connected to the AMF, and the LMF and the AMF are connected through an NLs interface. A UE communicates with a serving base station through a Uu link. An ng-eNB is an LTE base station, and a gNB is an NR base station. The base stations communicate with each other through an Xn interface. The base station communicates with the AMF through an NG-C interface. The AMF (access and mobility management function, access and mobility management unit) is equivalent to a router for communication between the gNB and the LMF. The LMF implements location estimation of the UE. The AMF communicates with the LMF through an NLs interface. The LMF is responsible for supporting different types of location services related to the terminal device, including positioning the terminal device and transferring assistance data to the terminal device. The LMF may perform positioning calculation on the terminal device based on a measurement result of another network element. The AMF may receive a terminal device-related location service request from a 5th generation core network location service (5th generation core network location service, 5GC LCS) entity, or the AMF may start some location services on behalf of a specific terminal device, and forward the location service request to the LMF. After location information returned by the terminal device is obtained, the related location information is returned to the 5GC LCS entity.

The NG-RAN may include a next-generation NodeB (next-generation NodeB, gNB), a next-generation evolved NodeB (next-generation evolved NodeB, ng-eNB), and the like. The gNB and the ng-eNB are connected through an Xn interface, and the AMF and the ng-eNB/gNB are connected through an NG-C interface.

One or more network devices on an NG-RAN side configure, for the terminal, a resource used to send a reference signal, measure uplink signals such as the reference signal from the terminal, and feed back a measurement result to the LMF to support positioning. It should be understood that the reference signal is used for positioning, and may also be referred to as a positioning reference signal. This specification is mainly for an uplink positioning scenario or an uplink/downlink positioning scenario. Therefore, the positioning reference signal may be an SRS, a preamble (preamble), or the like. In this specification, an example in which the positioning reference signal is an SRS is used. When uplink positioning or uplink/downlink positioning is performed on the terminal device in a radio resource control (radio resource control, RRC) inactive (inactive) state, to avoid frequent RRC connections when a sounding reference signal resource is configured for the terminal device, a same SRS resource used for positioning the terminal device is configured in a plurality of cells. The terminal device determines a sending parameter of the SRS by measuring an NCD-SSB.

A method provided in embodiments of this application may be applied to various communication systems, for example, an LTE system, a 5th generation (5th generation, 5G) system like NR, and a next-generation communication system like a 6G system. Certainly, the technical solutions in embodiments of this application may also be applied to another communication system, provided that the communication system has a positioning requirement for a terminal. In addition, the communication system is further applicable to a future-oriented communication technology. The systems described in embodiments of this application are intended to describe the technical solutions in embodiments of this application more clearly, and constitute no limitation on the technical solutions provided in embodiments of this application. A person of ordinary skill in the art may learn that, with evolution of a network architecture, the technical solutions provided in embodiments of this application are also applicable to similar technical problems.

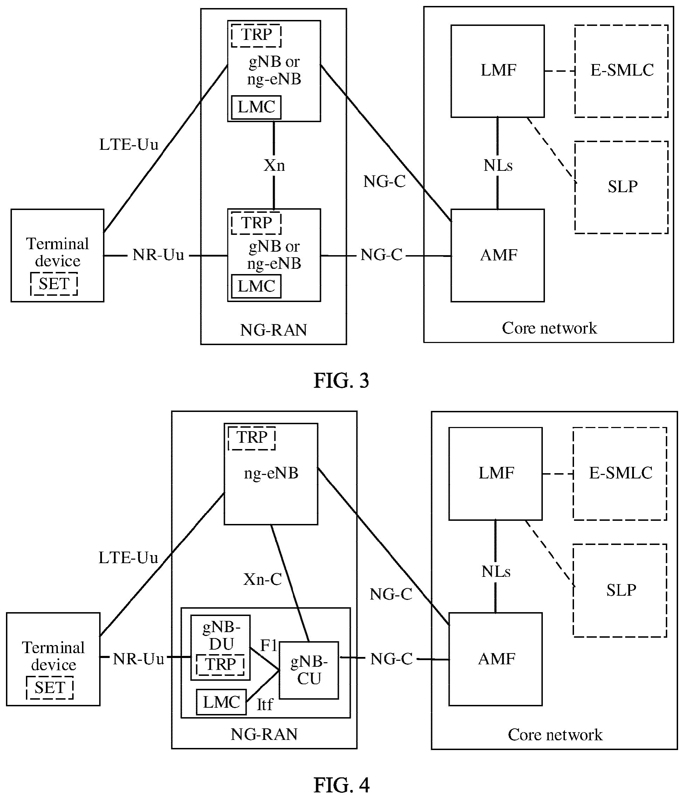

FIG. 3 shows a network architecture of a communication system to which an embodiment of this application is applicable. The communication system includes a core network, an NG-RAN, and a terminal. The core network includes network elements/modules such as an LMF, an AMF, a secure user plane location (secure user plane location, SUPL) location platform (SUPL location platform, SLP), and an enhanced serving mobile location center (enhanced serving mobile location center, E-SMLC). The NG-RAN includes network elements/modules such as a gNB or an ng-eNB. For specific functions of the network elements/modules such as the LMF, the AMF, the SLP, the E-SMLC, the gNB, and the ng-eNB and connection relations between the network elements/modules, refer to descriptions of a related part in FIG. 2 above. Details are not described herein again.

A difference from FIG. 2 lies in that, in the network architecture shown in FIG. 3, an LMC is added to the NG-RAN, and the LMC is specifically disposed inside a base station, for example, disposed in the gNB or the ng-eNB. In this network architecture, the LMC serves as an internal function of the base station. Therefore, no new interface needs to be introduced.

FIG. 4 shows a network architecture of another communication system to which an embodiment of this application is applicable. As shown in FIG. 3, the communication system also includes a core network, an NG-RAN, and a terminal. A difference from FIG. 3 lies in that an LMC in the network architecture shown in FIG. 4 serves as an independent logical node in the NG-RAN, and is connected to a base station through a new interface. For example, in FIG. 3, the LMC is connected to a gNB-CU through an interface Itf.

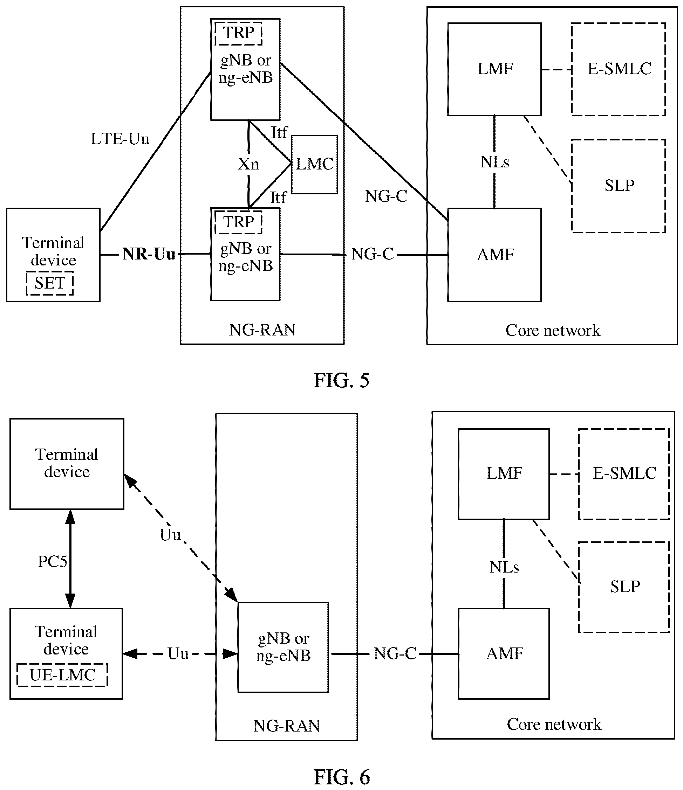

FIG. 5 shows a network architecture of another communication system to which an embodiment of this application is applicable. As shown in FIG. 5, the communication system also includes a core network, an NG-RAN, and a terminal. An LMC serves as an independent logical node in the NG-RAN. A difference from FIG. 4 lies in that the LMC may be connected to a plurality of base stations through new interfaces in FIG. 5. In FIG. 5, an example in which the LMC is connected to two base stations is used. In specific implementation, the LMC may alternatively be connected to more base stations.

FIG. 6 shows a network architecture of another communication system to which an embodiment of this application is applicable. As shown in FIG. 6, the communication system also includes a core network, an NG-RAN, and a terminal. Different from that in FIG. 2 to FIG. 4, in the network architecture shown in FIG. 6, an LMC is deployed inside the terminal. For example, a UE-LMC is disposed in a UE, and UEs communicate with each other through a PC5 interface.

It should be understood that FIG. 2, FIG. 3, FIG. 4, FIG. 5, and FIG. 6 are merely examples for describing the communication systems to which embodiments of this application are applicable, and do not specifically limit types, quantities, connection manners, and the like of network elements included in the communication systems to which this application is applicable. In addition, a network element/module shown by dashed lines in FIG. 2 to FIG. 6 is not essential, and is optional. For example, the E-SMLC or the SLP is not essential. Alternatively, a network element/module indicated by dashed lines is in another existence form. For example, the gNB or the ng-eNB is also referred to as a TRP in some embodiments, and the terminal is referred to as a SET in some embodiments.

Currently, when a terminal device is in a positioning area, regardless of whether the terminal device performs cell handover, a same SRS resource is used for sending. When the terminal moves in a positioning area, the terminal may send an SRS by using an obtained SRS resource. In other words, when the terminal performs cross-cell handover, the terminal does not need to re-obtain an SRS resource. When the terminal is handed over from one positioning area to another positioning area, the terminal re-obtains an SRS resource. A sending parameter of the SRS may be obtained by measuring an SSB signal of a current cell, and different cells correspond to different SSB indexes. To obtain the sending parameter, for example, a pathloss, of the SRS, a UE needs to measure SSBs of different cells in different cells, resulting in a complex procedure, and power consumption of the terminal device is increased. In addition, when a reference signal received power (reference signal received power, RSRP) of a CD-SSB measured in a cell in which the terminal device is located is less than a threshold, a CD-SSB of a neighboring cell needs to be measured, to determine whether cell handover needs to be performed. In this case, neighboring cell measurement needs to be frequently performed. To perform CD-SSB measurement of the neighboring cell, SSBs of different cells need to be measured. This process increases power consumption of the terminal device and causes high power consumption.

Based on the foregoing problem, this application provides a communication method. A first network device sends first configuration information to a terminal device, where the first configuration information includes configuration information of at least one first NCD-SSB and configuration information of a first reference signal, the at least one first NCD-SSB is associated with the first reference signal, and the first reference signal is used to position the terminal device. Then, the terminal device measures the at least one first NCD-SSB, and determines a sending parameter of the first reference signal. When the terminal device is in different cells, the terminal device may measure first NCD-SSBs of the different cells at a same frequency domain position, and then determine the sending parameter of the first reference signal based on a measurement result, so that an additional neighboring cell search process can be avoided, and power consumption of the terminal device can be reduced.

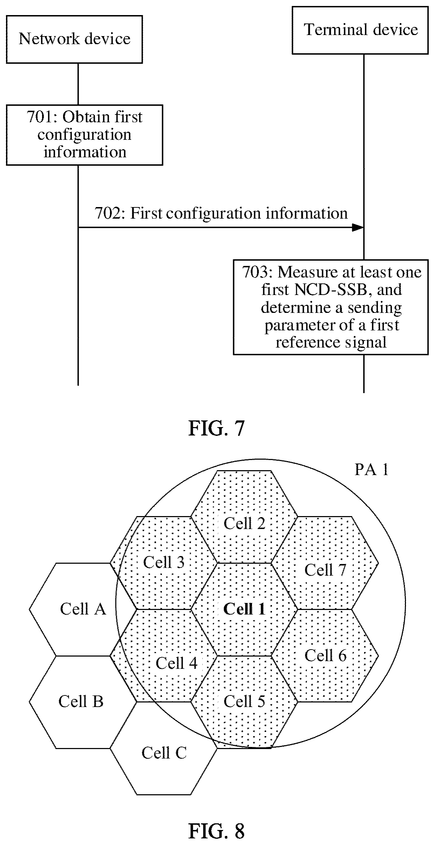

Based on embodiments shown in FIG. 1 to FIG. 6 and the foregoing other content, FIG. 7 is an example of a schematic flowchart of a communication method according to an embodiment of this application. For ease of understanding, FIG. 7 is described from a perspective of interaction between apparatuses.

A terminal device in FIG. 7 may be the terminal device shown in FIG. 1 to FIG. 6 or a chip (system) inside the terminal. A first network device in FIG. 7 may be the network device in FIG. 1 to FIG. 6 or a chip (system) inside the network device. The terminal device in FIG. 7 may be the terminal device in FIG. 1 to FIG. 6 or a chip (system) inside the terminal device.

As shown in FIG. 7, the method includes the following steps.

Step 701: The network device obtains first configuration information.

The first configuration information includes configuration information of at least one first NCD-SSB and configuration information of a first reference signal, the at least one first NCD-SSB is associated with the first reference signal, and the first reference signal is used to position the terminal device.

The reference signal in embodiments of this application is, for example, an SRS.

In some embodiments, the configuration information of the first NCD-SSB may include at least one of the following: a frequency, a sending periodicity, and a positioning area identifier of the first NCD-SSB. The positioning area identifier may be represented by using a UCPA ID or a PAID, or may be represented by using a PCI, or may be represented by using another symbol. This is not limited in this application. It should be understood that, when the positioning area identifier of the first NCD-SSB is represented by using a PCI, the PCI of the NCD-SSB may be different from a PCI of a cell sending the first NCD-SSB, and the PCI of the NCD-SSB is different from a PCI of at least one cell of at least two cells corresponding to the NCD-SSB.

In this embodiment of this application, the at least one first NCD-SSB is implemented in a plurality of manners.

In an implementation of the at least one first NCD-SSB, the at least one first NCD-SSB corresponds to at least one cell. It should be understood that the at least one cell may be a cell in a same positioning area, or may be a cell in different positioning areas.

There may be a plurality of cases in which the at least one first NCD-SSB corresponds to the at least one cell.

Case 1: The at least one cell corresponds to one first NCD-SSB.

10 cells are used as an example, and the 10 cells all send a same first NCD-SSB.

Case 2: Each of the at least one cell corresponds to a plurality of first NCD-SSBs.

10 cells are used as an example. For example, each of the 10 cells sends four first NCD-SSBs: a first NCD-SSB 1, a first NCD-SSB 2, a first NCD-SSB 3, and a first NCD-SSB 4.

For another example, a cell 1 to a cell 6 in the 10 cells send a first NCD-SSB 1, and a cell 7 to a cell 10 send a first NCD-SSB 2. For another example, a cell 1 to a cell 6 send a first NCD-SSB 1 and a first NCD-SSB 3, and a cell 7 to a cell 10 send a first NCD-SSB 2 and a first NCD-SSB 4.

The at least one first NCD-SSB is sent by the at least one cell in a single frequency network (single frequency network, SFN) manner. In other words, the at least one cell sends a same first NCD-SSB. When the terminal device is in different cells in a same positioning area, the different cells in the same positioning area correspond to a same NCD-SSB. The terminal device may measure first NCD-SSBs of different cells at a same frequency domain position, so that an additional neighboring cell search process in the same positioning area can be avoided, and power consumption of the terminal device can be reduced.

In this embodiment of this application, the first NCD-SSB includes a primary synchronization signal, a secondary synchronization signal, a physical broadcast channel, and a demodulation reference signal on the physical broadcast channel. The primary synchronization signal, the secondary synchronization signal, the physical broadcast channel, and the demodulation reference signal in the at least one first NCD-SSB are respectively the same. The primary synchronization signal, the secondary synchronization signal, the physical broadcast channel, and the demodulation reference signal in the at least one first NCD-SSB may be sent in the SFN manner.

In some other embodiments, a primary synchronization signal, a secondary synchronization signal, and a demodulation reference signal in the at least one first NCD-SSB may be sent in the SFN manner, and a physical broadcast channel in the at least one first NCD-SSB is not sent in the SFN manner. In this way, channel reusability can be increased.

In this embodiment of this application, the at least one first NCD-SSB may correspond to one positioning area, that is, at least one first NCD-SSB is configured for one positioning area. One positioning area includes at least one cell, each cell may correspond to one or more first NCD-SSBs, the at least one first NCD-SSB is associated with the first reference signal, and a sending parameter of the first reference signal may be determined based on the at least one first NCD-SSB.

For example, the positioning area is a PA 1 shown in FIG. 7. The PA 1 includes seven cells (cells): a cell 1 to a cell 7. A same first NCD-SSB is configured for the seven cells, and each first NCD-SSB is associated with a first reference signal SRS 1 corresponding to the PA 1. In other words, each of the cell 1 to the cell 7 sends the first NCD-SSB.

For another example, the positioning area PA 1 includes seven cells, each cell corresponds to a plurality of first NCD-SSBs, and the plurality of first NCD-SSBs are all associated with a first reference signal SRS 1 corresponding to the PA 1. For example, each cell sends a first NCD-SSB 1, a first NCD-SSB 2, a first NCD-SSB 3, and a first NCD-SSB 4.

For another example, the positioning area PA 1 includes a cell 1 to a cell 10, the cell 1 to a cell 5 send a first NCD-SSB 1, and a cell 6 to the cell 10 send a first NCD-SSB 2.

For another example, the positioning area PA 1 includes a cell 1 to a cell 10, the cell 1 to a cell 5 send a first NCD-SSB 1 and a first NCD-SSB 3, and a cell 6 to the cell 10 send a first NCD-SSB 2 and a first NCD-SSB 4.

The positioning area in embodiments of this application may be understood as an SRS positioning validity area (SRS positioning validity area). In the positioning area, even if the terminal changes a cell on which the terminal camps, an SRS configuration is still valid. It should be understood that the positioning area may also be represented by a PA in the following description.

In another implementation of the at least one first NCD-SSB, the at least one first NCD-SSB corresponds to at least one transmit beam of a same cell, each transmit beam corresponds to one first NCD-SSB, and the at least one first NCD-SSB is sent in a beam sweeping manner. It may alternatively be understood as that the at least one first NCD-SSB may be sent in a time division multiplexing manner. The transmit beam in embodiments of this application is a transmit spatial filter coefficient.

In an example, 10 cells and four first NCD-SSBs are still used as an example. Each of the 10 cells corresponds to four first NCD-SSBs. For each cell, one cell may include a plurality of beams, each transmit beam corresponds to one first NCD-SSB, each cell sends a first NCD-SSB 1, a first NCD-SSB 2, a first NCD-SSB 3, and a first NCD-SSB 4 in a beam sweeping manner, and each cell includes a plurality of beams.

The at least one first NCD-SSB may be associated with the first reference signal in a plurality of manners.

In a possible implementation, an NCD-SSB configuration may be added to configuration signaling of an SRS resource set (resource set). The NCD-SSB configuration may include one or more NCD-SSBs. When the NCD-SSB is configured, an SRS pathloss (pathloss) may be determined based on the NCD-SSB, or signaling of the NCD-SSB corresponding to the pathloss may be added.

In another possible implementation, an NCD-SSB configuration may be directly added to an RRC release message. The NCD-SSB configuration may include an ID of an SRS resource set, and the ID corresponds to the SRS resource set. A pathloss of the SRS resource set is determined based on the NCD-SSB.

Step 702: The network device sends the first configuration information.

Correspondingly, the terminal device receives the first configuration information from the network device.

In this embodiment of this application, the network device may be a network device currently serving the terminal. The network device may be a device, for example, a gNB or an ng-eNB, in an NG-RAN. Alternatively, the network device may be an LMC. As described above, if the LMC serves as an internal function of the network device, the network device is a network device in which the LMC is located. If a deployment solution of the LMC is shown in FIG. 4 or FIG. 5, that is, the LMC serves as an independent logical node and is connected to one or more network devices through an interface, the network device is any network device connected to the LMC.

The first configuration information may be carried in an RRC message, for example, an RRC release message, so that after entering an inactive state, the terminal device measures the at least one first NCD-SSB based on the configuration information of the at least one first NCD-SSB, determines the sending parameter of the first reference signal, and sends the reference signal based on the configuration information of the first reference signal.

Step 703: The terminal device measures the at least one first NCD-SSB, and determines the sending parameter of the first reference signal.

In this embodiment of this application, the sending parameter of the first reference signal includes at least one of the following: whether to send the first reference signal, a transmit power of the first reference signal, and transmit timing of the first reference signal. Whether to send the first reference signal may be determined based on an RSRP of the at least one first NCD-SSB, in other words, reference signal received power-based validation (RSRP-based validation) of the SRS is determined based on the at least one first NCD-SSB. If the RSRP of the at least one first NCD-SSB is less than a threshold, the SRS corresponding to the at least one first NCD-SSB is not to be sent.

For example, the first reference signal is associated with one first NCD-SSB. Whether to send the first reference signal may be determined by measuring an RSRP of the first NCD-SSB associated with the first reference signal. If the measured RSRP of the first NCD-SSB is less than a first threshold, it is determined not to send the first reference signal; or if the measured RSRP of the first NCD-SSB is greater than or equal to a first threshold, it is determined to send the first reference signal. The transmit power of the first reference signal is determined based on an RSRP of one first NCD-SSB associated with the first reference signal.

For example, the first reference signal is associated with a plurality of first NCD-SSBs. Whether to send the first reference signal may be determined by measuring RSRPs of the plurality of first NCD-SSBs associated with the first reference signal, in other words, RSRP-based validation of the SRS is determined based on the at least one first NCD-SSB. For example, if an average value of measured RSRPs of the plurality of first NCD-SSBs is less than a first threshold, it is determined not to send the first reference signal; or if an average value of measured RSRPs of the plurality of first NCD-SSBs is greater than or equal to a first threshold, it is determined to send the first reference signal. For another example, if a largest value of measured RSRPs of the plurality of first NCD-SSBs is less than a first threshold, it is determined not to send the first reference signal; or if a largest value of measured RSRPs of the plurality of first NCD-SSBs is greater than or equal to a first threshold, it is determined to send the first reference signal. The transmit power of the first reference signal may be determined based on the RSRPs of the plurality of first NCD-SSBs associated with the first reference signal, for example, determined based on the largest value of the RSRPs of the plurality of first NCD-SSBs, or determined based on the average value of the RSRPs of the plurality of first NCD-SSBs.

The transmit timing of the first reference signal may be determined in the following manner: The terminal device may determine downlink reference timing based on the first NCD-SSB, and apply an uplink timing advance to the downlink reference timing, to determine the transmit timing of the SRS.

In this embodiment of this application, the first configuration information received by the terminal device includes the configuration information of the at least one first NCD-SSB and the configuration information of the first reference signal, and the at least one first NCD-SSB is associated with the first reference signal. If different cells still correspond to different CD-SSBs, the first reference signal needs to be associated with CD-SSBs of different cells, and a UE needs to frequently search for CD-SSBs when the UE is in different cells. Consequently, power consumption of the UE is high. However, in this application, when the terminal device is in different cells, the terminal device may measure first NCD-SSBs of the different cells at a same frequency domain position, and then determine the sending parameter of the first reference signal based on a measurement result, so that an additional neighboring cell search process can be avoided, and power consumption of the terminal device can be reduced.

According to the foregoing embodiment, the terminal device may further perform downlink synchronization on the at least one first NCD-SSB, to implement downlink time synchronization.

In some other embodiments, the first configuration information may further include configuration information of a second reference signal, the at least one first NCD-SSB is further associated with the second reference signal, and the second reference signal is used to position the terminal device. In other words, the at least one first NCD-SSB is associated with both the first reference signal and the second reference signal.

Alternatively, the terminal device may determine a sending parameter of the second reference signal by measuring the at least one first NCD-SSB. The sending parameter of the second reference signal includes at least one of the following: whether to send the second reference signal, a transmit power of the second reference signal, and transmit timing of the second reference signal. For specific implementation of the sending parameter of the second reference signal, refer to the specific implementation of the first reference signal. Details are not described herein again.

It should be understood that the first configuration information may further include configuration information of one or more other reference signals, the other reference signal may be a reference signal other than the first reference signal and the second reference signal, and the at least one first NCD-SSB may be further associated with one or more other reference signals, which are not listed one by one herein.

In this embodiment of this application, the network device may further send second configuration information. Correspondingly, the terminal device receives the second configuration information of the network device, then measures at least one second NCD-SSB, and determines a sending parameter of a third reference signal. The second configuration information includes configuration information of the at least one second NCD-SSB and configuration information of the third reference signal, the at least one second NCD-SSB is associated with the third reference signal, and the third reference signal is used to position the terminal device.

The configuration information of the second NCD-SSB may include at least one of the following: a frequency, a sending periodicity, and a positioning area identifier of the second NCD-SSB. For specific implementation of the configuration information of the second NCD-SSB, refer to the specific implementation of the configuration information of the first NCD-SSB. Details are not described herein again.

The sending parameter of the third reference signal includes at least one of the following: whether to send the third reference signal, a transmit power of the third reference signal, and transmit timing of the third reference signal. For specific implementation of the sending parameter of the third reference signal, refer to the specific implementation of the first reference signal. Details are not described herein again.

It should be understood that the at least one second NCD-SSB may correspond to at least one cell, or may correspond to one positioning area, or may correspond to at least one transmit beam of a same cell. For specific implementation, refer to related descriptions of the first NCD-SSB. Details are not described herein again. For the association between the at least one second NCD-SSB and the third reference signal, refer to the related description of the association between the at least one first NCD-SSB and the first reference signal. Details are not described herein again.

For example, there may be a plurality of groups of configurations for one positioning area. Two groups of configurations are used as an example. For example, the first configuration information is configured for some cells in the positioning area, and the second configuration information is configured for other cells.

For another example, there may be a plurality of groups of configurations for one positioning area. Two groups of configurations are used as an example. For example, when the first configuration information is currently used, if the terminal device receives the first configuration information, the terminal device measures the at least one first NCD-SSB based on the first configuration information; or when the terminal device receives the second configuration information, the terminal device measures the at least one first NCD-SSB based on the second configuration information.

Based on embodiments shown in FIG. 1 to FIG. 7 and the foregoing other content, the following describes the communication method in embodiments of this application with reference to specific positioning scenarios.

In a positioning scenario 1, for example, the terminal device is a UE. As shown in FIG. 8, a current serving cell of the UE is a cell 1, and a virtualized logical cell including the cell 1 and neighboring cells cell 2 to cell 7 of the cell 1 is referred to as a positioning area PA 1. The PA 1 corresponds to a same set of reference signals (for example, an SRS 1). The SRS 1 is associated with a same set of NCD-SSBs (for example, an NCD-SSB 1). Each cell in the PA 1 sends the NCD-SSB 1 in an SFN manner. A base station corresponding to the cell 1 in the PA 1 is referred to as a serving base station, and may also be referred to as an S-gNB. A base station corresponding to each of the cell 2 to the cell 7 other than the cell 1 in the PA 1 is referred to as an N-gNB.

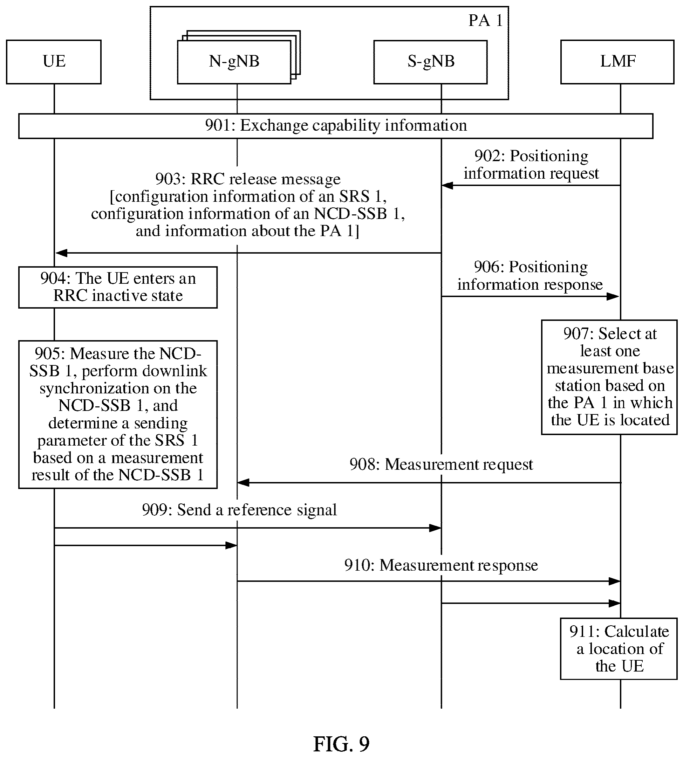

FIG. 9 is an example of a schematic flowchart of a communication method according to an embodiment of this application.

As shown in FIG. 9, the method includes the following steps.

Step 901: A UE exchanges capability information with a serving base station (S-gNB) and an LMF.

The UE exchanges positioning-related capability information of the UE in an inactive state with the S-gNB and the LMF. For example, the UE has a capability of sending an SRS in the inactive state. The UE may send the positioning-related capability information to the S-gNB, and the S-gNB may send the positioning-related capability information to the LMF.

Step 902: The LMF sends a positioning information request to the S-gNB.

Correspondingly, the S-gNB receives the positioning information request.

Before sending the positioning information request, the LMF may first obtain the capability information of the UE. Then, the LMF sends the positioning information request to the S-gNB based on the capability information of the UE. The positioning information request may be positioning information request. The positioning information request is used to request the S-gNB to configure a reference signal (for example, an SRS) for the UE, and obtain SRS configuration information of the UE. For example, the S-gNB is requested to configure a resource of a reference signal for the UE. For another example, a related parameter of the reference signal, for example, pathloss configuration information, is requested to be configured. The pathloss configuration information may be used to calculate a power of sending a reference signal (for example, an SRS) by a terminal apparatus. The LMF may further recommend an SRS configuration based on the capability information of the UE, a requirement of a positioning service, and resource coordination of a positioning terminal. In this case, the positioning information request may further carry SRS resource configuration information recommended by the LMF.

After step 902, the S-gNB may perform step 903 and step 906. A sequence of performing step 903 and step 906 is not limited. A sequence of performing steps 904 and 905 and steps 907 and 908 is not limited.

Step 903: The S-gNB sends an RRC release message to the UE.

Correspondingly, the UE receives the RRC release message from the S-gNB, and the RRC release message may be RRC Release.

The S-gNB may include first configuration information in the RRC release message, and then the S-gNB sends the RRC release message to the UE. The first configuration information includes configuration information of an SRS 1, configuration information of an NCD-SSB 1, and information about a PA 1. The configuration information of the SRS 1 may include a time-frequency domain position, a sending periodicity, Comb, and the like of the SRS 1. The configuration information of the NCD-SSB 1 may include a frequency, a subcarrier spacing, a periodicity, and a positioning area identifier of the NCD-SSB 1. The information about the PA 1 includes an identifier of the PA 1 and a cell list included in the PA 1.

Optionally, the S-gNB may alternatively send the first configuration information to the UE through other signaling. The S-gNB may alternatively send content included in the first configuration information through a plurality of pieces of signaling. Each piece of signaling includes at least one of the configuration information of the SRS 1, the configuration information of the NCD-SSB 1, and the information about the PA 1.

Step 904: The UE enters an RRC inactive state.

After receiving the RRC Release message, the UE releases an RRC connection and enters the RRC inactive state.

Step 905: The UE measures the NCD-SSB 1, performs downlink synchronization on the NCD-SSB 1, determines a sending parameter of the SRS 1 based on a measurement result of the NCD-SSB 1, and sends the SRS 1 in the sending periodicity of the SRS 1.

Because the RRC release message previously received by the UE carries the configuration information of the SRS 1, the UE may determine the sending periodicity of the SRS 1 based on the configuration information of the SRS 1, and perform synchronization on the NCD-SSB 1, to implement downlink time synchronization. After the synchronization on the NCD-SSB 1 is completed, the NCD-SSB 1 is measured based on the configuration information of the NCD-SSB 1. Then, the sending parameter of the SRS is determined based on the measurement result of the NCD-SSB 1, and the SRS 1 is sent in the sending periodicity of the SRS 1. For specific content, refer to related content in step 703. Details are not described herein again.

Step 906. The S-gNB sends a positioning information response to the LMF.

The S-gNB may send the configuration information of the SRS 1 to the LMF through the positioning information response. Correspondingly, the LMF receives the positioning information response from the S-gNB, to obtain the configuration information of the SRS 1. The positioning information response may be positioning information response.

Step 907: The LMF selects at least one measurement base station based on the PA 1 in which the UE is located.

For example, as shown in FIG. 7, the UE is currently located in the positioning area PA 1. The LMF may select at least one measurement base station from base stations corresponding to cells in the positioning area PA 1. For example, an S-gNB 1 corresponding to a cell 1, an N-gNB 2 corresponding to a cell 2, an N-gNB 3 corresponding to a cell 3, and an N-gNB 5 corresponding to a cell 5 are selected from base stations corresponding to cells cell 1 to cell 7 in the PA 1 as measurement base stations, and then the LMF separately sends a measurement request to the S-gNB 1, the N-gNB 2, the N-gNB 3, and the N-gNB 5.

Step 908: The LMF sends the measurement request to the at least one measurement base station.

Correspondingly, the at least one measurement base station receives the measurement request from the LMF, where the measurement request includes the configuration information of the SRS 1. In this way, the measurement base station may measure, based on the configuration information that is of the SRS 1 and that is carried in the measurement request, the SRS 1 sent by the UE.

Step 909: The UE sends a reference signal.

Before the UE sends the reference signal (for example, the SRS 1), the UE may further first determine, based on a received RSRP of the NCD-SSB 1, whether to send the SRS 1. For specific implementation, refer to the foregoing related content. Details are not described herein again. After determining to send the SRS, the UE may send the SRS based on the configuration information of the SRS 1.

For example, the UE is currently located in the positioning area PA 1, the UE sends the SRS 1, and base stations corresponding to all cells in the PA 1 may receive the SRS 1. Four measurement base stations (for example, the S-gNB 1, the N-gNB 2, the N-gNB 3, and the N-gNB 5) that receive the measurement request individually measure the SRS 1, to obtain corresponding measurement results.

The measurement result may be an RSRP and relative time of arrival (relative time of arrival, RTOA) of the reference signal. For example, a measurement result of the SRS 1 measured by the S-gNB 1 is an RSRP 1 and RTOA 1, a measurement result of the SRS 1 measured by the N-gNB 2 is an RSRP 2 and RTOA 2, a measurement result of the SRS 1 measured by the N-gNB 3 is an RSRP 3 and RTOA 3, and a measurement result of the SRS 1 measured by the N-gNB 5 is an RSRP 4 and RTOA 4.

Step 910: The at least one measurement base station sends a measurement response to the LMF.

Correspondingly, the LMF separately receives the measurement response from the at least one measurement base station, where the measurement response includes the measurement result of the SRS 1.

For example, a measurement response sent by the S-gNB 1 to the LMF includes the RSRP 1 and the RTOA 1, a measurement response sent by the N-gNB 2 to the LMF includes the RSRP 2 and the RTOA 2, a measurement response sent by the N-gNB 3 to the LMF includes the RSRP 3 and the RTOA 3, and a measurement response sent by the N-gNB 5 to the LMF includes the RSRP 4 and the RTOA 4.

Step 911: The LMF calculates a location of the UE.

The LMF may calculate the location of the UE based on the measurement result of the at least one measurement base station. For example, the LMF calculates the location of the UE based on the received RTOA 1, RTOA 2, RTOA 3, RTOA 4, RSRP 1, RSRP 2, RSRP 3, and RSRP 4.

In this embodiment of this application, a same NCD-SSB is configured for a plurality of cells in a same PA, the NCD-SSB is measured based on configuration information of a plurality of NCD-SSBs configured on a network side, and the plurality of NCD-SSBs are associated with SRS configuration information of the PA. If different cells in the PA still correspond to different CD-SSBs, the SRS 1 needs to be associated with the CD-SSBs of the different cells. When the UE is in different cells in the PA, the UE needs to frequently perform neighboring cell search, causing high power consumption of the UE. However, in this application, when the UE is in different cells in the PA 1, the UE may measure an RSRP of the NCD-SSB 1 at a same frequency domain position, to obtain the sending parameter of the SRS 1, so that an additional neighboring cell search process can be avoided, and power consumption of the terminal device can be reduced.

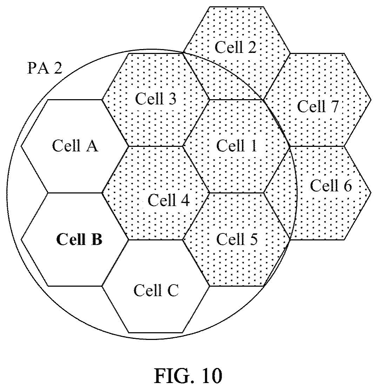

In a positioning scenario 2, for example, the terminal device is a UE. With reference to FIG. 8 and FIG. 10, when the UE moves from the cell 1 in the PA 1 shown in FIG. 8 to an edge cell in the PA 1 or moves out of the PA 1, for example, moves to a cell B shown in FIG. 10, where the cell 1B is located in a PA 2, the UE measures an NCD-SSB 1 corresponding to the PA 1 to obtain an RSRP 1. If the RSRP 1 is less than a first threshold, a neighboring cell search is started, and a PA switching process is performed. The PA 2 corresponds to a same set of reference signals (for example, an SRS 2). The SRS 2 is associated with a same set of NCD-SSBs 2. Each cell in the PA 2 sends the NCD-SSB 2 in an SFN manner. A base station corresponding to the cell 1 is referred to as an original serving base station (referred to as an original S-gNB in the following), and a base station corresponding to the cell 1B is referred to as a target serving base station (referred to as a target S-gNB in the following).

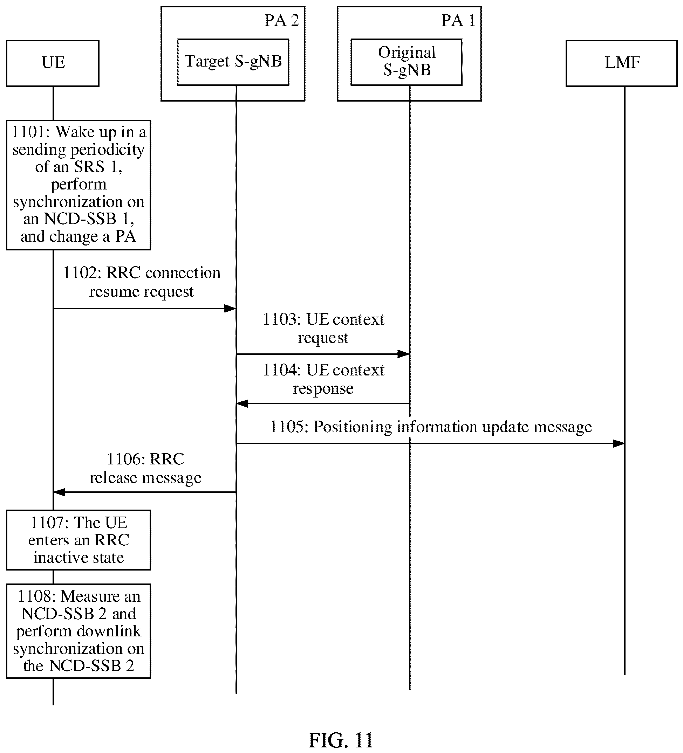

FIG. 11 is an example of a schematic flowchart of a communication method according to an embodiment of this application.

As shown in FIG. 11, the method includes the following steps.

Step 1101: A UE wakes up in a sending periodicity of an SRS 1, performs synchronization on an NCD-SSB, and changes a PA.

For example, as shown in FIG. 10, after moving to the cell B, the UE performs synchronization on the NCD-SSB 1, and then measures an RSRP 1 of the NCD-SSB 1 sent by the original S-gNB. If the RSRP 1 is greater than or equal to a first threshold, it is determined that the UE is still in the PA 1. If the RSRP 1 is less than a first threshold, it is determined that the UE moves out of the PA 1, that is, the PA in which the UE is located changes. Then, neighboring cell search is started. When the cell B that meets a camping condition is found, the UE camps on the cell B, and the cell B corresponds to the target S-gNB.

Step 1102: The UE sends an RRC connection resume request to the target S-gNB.

Correspondingly, the target S-gNB receives the RRC connection resume request from the UE, and the RRC connection resume request may be RRC resume request.

Step 1103: The target S-gNB sends a UE context request to the original S-gNB.

Correspondingly, the original S-gNB receives the UE context request from the target S-gNB, and the UE context request may be retrieve UE context request. For example, the target S-gNB may include context information of the UE in the UE context request. After receiving the UE context request, the original S-gNB determines an anchor (anchor) base station for migrating the UE. The anchor base station may also be referred to as a positioning base station, namely, the target S-gNB. Then, the original S-gNB sends the context information to the target S-gNB. The context information of the UE may include positioning information (positioning information), and the positioning information may be information used to assist the target S-gNB in configuring a reference signal for the UE.

Step 1104: The original S-gNB sends a UE context response to the target S-gNB.

Correspondingly, the target S-gNB receives the UE context response sent by the original S-gNB. The original S-gNB may include the positioning information in the UE context response and send the UE context response to the target S-gNB. The UE context response may be retrieve UE context response.

After step 1104, the target S-gNB may perform step 1105 and step 1106. A sequence of performing step 1105 and step 1106 is not limited.

Step 1105: The target S-gNB sends a positioning information update message to an LMF.

Correspondingly, the LMF receives the positioning information update message from the target S-gNB, where the positioning information update message may include configuration information of the SRS 2 and information about the PA 2, and the positioning information update message may be positioning information update.

Step 1106: The target S-gNB sends an RRC release message to the UE.

Correspondingly, the UE receives the RRC release message from the target S-gNB, and the RRC release message may be RRC Release.

The target S-gNB may include second configuration information in the RRC release message, and then the target S-gNB sends the RRC release message to the UE. The second configuration information includes the configuration information of the SRS 2, configuration information of the NCD-SSB 2, and the information about the PA 2. The configuration information of the SRS 2 may include a time-frequency domain position, a sending periodicity, Comb, and the like of the SRS 2. The configuration information of the NCD-SSB 2 may include a frequency, a subcarrier spacing, a periodicity, and a positioning area identifier of the NCD-SSB 2. The information about the PA 2 includes an identifier of the PA 2 and a cell list included in the PA 2.

Optionally, the target S-gNB may alternatively send the second configuration information to the UE through other signaling. The target S-gNB may alternatively send content included in the second configuration information through a plurality of pieces of signaling. Each piece of signaling includes at least one of the configuration information of the SRS 2, the configuration information of the NCD-SSB 2, and the information about the PA 2.

Step 1107: The UE enters an RRC inactive state.

Step 1108: The UE measures the NCD-SSB 2 and performs downlink synchronization on the NCD-SSB 2.

Because the RRC release message received by the UE before step 1108 carries the configuration information of the SRS 2, the UE may determine the sending periodicity of the SRS 2 based on the configuration information of the SRS 2, and perform synchronization on the NCD-SSB 2, to implement downlink time synchronization. After the synchronization on the NCD-SSB 2 is completed, the NCD-SSB 2 is measured based on the configuration information of the NCD-SSB 2. Then, a sending parameter of the SRS 2 is determined based on a measurement result of the NCD-SSB 2, and the SRS 2 is sent based on the configuration information of the SRS 2. For specific implementation, refer to related content in step 703. Details are not described herein again.

After step 1108, a procedure of positioning the UE in the PA 2 is similar to the procedure of positioning the UE in the PA 1 in FIG. 8. For specific steps, refer to step 907 to step 911 shown in FIG. 9. Details are not described herein again.

In this embodiment of this application, a same NCD-SSB is configured for a plurality of cells in a PA, the NCD-SSB is measured based on configuration information of a plurality of NCD-SSBs configured on a network side, and the plurality of NCD-SSBs are associated with SRS configuration information of the PA. If different cells in the PA still correspond to different CD-SSBs, the SRS needs to be associated with the CD-SSBs of different cells. When measuring the CD-SSB, the UE needs to sense a cell ID of a neighboring cell, to measure a signal of the CD-SSB corresponding to the cell. When the UE is located in an edge cell of the PA or is about to move out of the current PA, power consumption of the UE is high. However, in this application, different cells in a same PA send a same NCD-SSB in an SFN manner, and the UE may measure NCD-SSBs of different cells at a same frequency domain position without knowing a neighboring cell ID, to determine, based on a measured RSRP of the NCD-SSB, whether to move out of the current PA. This can avoid additional neighboring cell search when the UE is located in an edge cell, and the power consumption of the terminal device can be reduced.

Names of the foregoing messages are merely examples. With evolution of communication technologies, the name of any one of the foregoing messages may change. However, regardless of how the names of the messages change, the messages fall within the protection scope of this application provided that meanings of the messages are the same as those of the foregoing messages in this application.

The foregoing mainly describes, from a perspective of interactions between the network elements, the solutions provided in this application. It may be understood that, to implement the foregoing functions, the foregoing network elements include corresponding hardware structures and/or software modules for performing the functions. A person skilled in the art should easily be aware that, in combination with units and algorithm steps of the examples described in embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

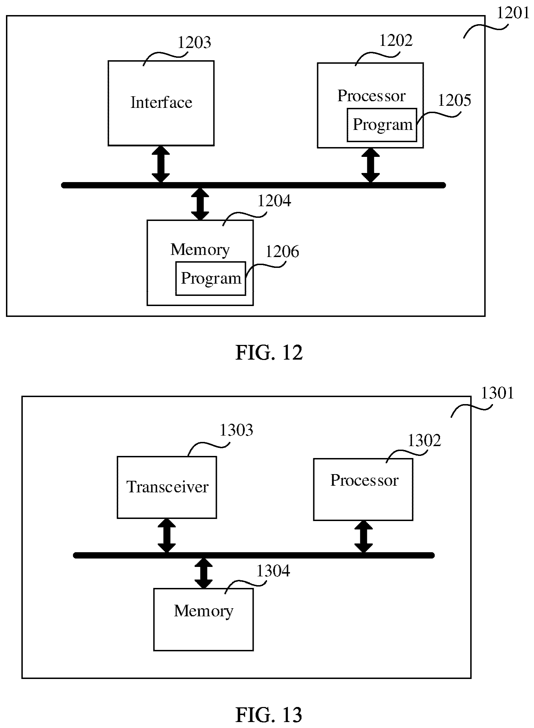

According to the foregoing method, FIG. 12 is a diagram of a structure of an apparatus according to an embodiment of this application.

FIG. 12 is a simplified diagram of an apparatus 1201. The apparatus 1201 is configured to implement a function of a network element in embodiments of this application. For example, the network element may be a base station, a terminal, a DU, a CU, a CU-CP, a CU-UP, or an RU. The apparatus 1201 may be the network element, an apparatus that can be installed in the network element, or an apparatus that can be used together with the network element. This is not limited. For example, the apparatus may be a chip or a chip system. The apparatus 1201 includes an interface 1203 and a processor 1202. Optionally, the processor 1202 is configured to execute a program 1205. The processor 1202 may store the program 1205, or obtain the program 1205 from another component or another device (for example, from a memory 1204 or from a third-party website through downloading). Optionally, the apparatus 1201 includes the memory 1204. The memory 1204 is configured to store a program 1206. The program 1206 may be pre-stored, or may be subsequently loaded. Optionally, the memory 1204 may be further configured to store necessary data. These components operate together to provide various functions described in embodiments of this application.

The processor 1202 may include one or more processors, to serve as a combination of computing devices. The processor 1202 may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, other appropriate hardware or firmware, and/or a combination of hardware and software configured to perform various functions described in embodiments of this application. The processor 1202 may be a general-purpose processor or a dedicated processor. For example, the processor 1202 may be a baseband processor or a central processing unit. The baseband processor may be configured to process a communication protocol and communication data. The central processing unit may be configured to execute a software program, and process data in the software program.

The interface 1203 may include any appropriate hardware or software configured to enable communication with one or more computer devices (for example, the network elements in embodiments of this application). For example, in some embodiments, the interface 1203 may include a terminal and/or a pin configured to be coupled with a wire of a wired connection or a wireless interface of a wireless connection. In some embodiments, the interface 1203 may include a transmitter, a receiver, an interface, and/or an antenna. The interface may be configured to enable communication between computer devices (for example, the network elements in embodiments of this application) by using any available protocol (for example, the 3GPP standard protocol).

The program in embodiments of this application is software in a broad sense. The software may be program code, a program, a subprogram, an instruction set, code, a code segment, a software module, an application program, a software application program, or the like. The program may be run in a processor and/or a computer, to perform various functions and/or processes described in embodiments of this application.

The memory 1204 may store necessary data required when the processor 1202 executes software. The memory 1204 may be implemented by using any appropriate storage technology. For example, the memory 1204 may be any available storage medium that can be accessed by a processor and/or a computer. A non-limiting example of the storage medium is a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic disk storage medium, a magnetic storage device, a flash memory, a register, a state memory, a remotely installed memory, a local or remote memory component, or any other medium that can carry or store software, data, or information and that can be accessed by a processor/computer.

The memory 1204 and the processor 1202 may be disposed separately, or may be integrated together. The processor 1202 may read information from the memory 1204, and store and/or write information in the memory. The memory 1204 may be integrated into the processor 1202. The processor 1202 and the memory 1204 may be disposed in an integrated circuit (for example, an application-specific integrated circuit (application-specific integrated circuit, ASIC)). The integrated circuit may be disposed in the network element or another network node in embodiments of this application. In the figure, the memory 1204 is shown by dashed lines, which further identifies that the memory is optional.

Further, the communication apparatus 1201 may further include a bus system. The processor 1202, the memory 1204, and the interface 1203 may be connected through the bus system.

As shown in FIG. 12, the apparatus 1201 may be a first communication apparatus (for example, a terminal device) or a second communication apparatus (for example, a network device), or may be a chip or a circuit, for example, a chip or a circuit that may be disposed in a first communication apparatus, or a chip or a circuit that may be disposed in a second communication apparatus.

When the apparatus 1201 is configured to implement a function of the terminal device, the processor 1202 is configured to: receive first configuration information from a network device through the interface 1203, measure at least one first NCD-SSB, and determine a sending parameter of a first reference signal.

When the apparatus 1201 is configured to implement a function of the terminal device, the processor 1202 is further configured to: receive second configuration information of the network device through the interface 1203, measure at least one second NCD-SSB, and determine a sending parameter of a third reference signal.

When the apparatus 1201 is configured to implement a function of the network device, the processor 1202 is configured to: obtain first configuration information, and send the first configuration information through the interface 1203.

When the apparatus 1201 is configured to implement a function of the network device, the processor 1202 is further configured to: receive second configuration information of the network device through the interface 1203, measure at least one second NCD-SSB, and determine a sending parameter of a third reference signal.

For concepts, explanations, detailed descriptions, and other steps of the communication apparatus that are related to the technical solutions provided in embodiments of this application, refer to descriptions about the content in the foregoing methods or other embodiments. Details are not described herein.

According to the foregoing method, FIG. 13 is a diagram of a structure of a communication apparatus according to an embodiment of this application. As shown in FIG. 13, the apparatus 1301 may include a transceiver 1303 and a processor 1302. Further, the communication apparatus 1301 may include a memory 1304. In the figure, the memory 1304 is shown by dashed lines, which further identifies that the memory is optional. The transceiver 1303 is configured to input and/or output information. The processor 1302 is configured to execute a computer program or an instruction, so that the apparatus 1301 implements the steps performed by the terminal device or the network device in the related solution in FIG. 7, FIG. 9, FIG. 10, or FIG. 11. In this embodiment of this application, the transceiver 1303 may implement the solution implemented by the interface 1203 in FIG. 12, the processor 1302 may implement the solution implemented by the processor 1202 in FIG. 12, and the memory 1304 may implement the solution implemented by the memory 1204 in FIG. 12. Details are not described herein again.

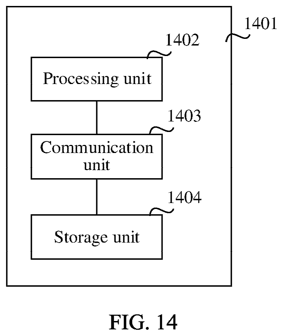

Based on the foregoing embodiments and a same concept, FIG. 14 is a diagram of a communication apparatus according to an embodiment of this application. As shown in FIG. 14, the apparatus 1401 may be a terminal device or a network device, or may be a chip or a circuit, for example, a chip or a circuit that may be disposed in the terminal device or the network device.

The apparatus 1401 includes a processing unit 1402 and a communication unit 1403. Further, the apparatus 1401 may include a storage unit 1404, or may not include a storage unit 1404. In the figure, the storage unit 1404 is shown by dashed lines, which further identifies that a memory is optional.

When the apparatus 1401 is configured to implement a function of the terminal device, the processing unit 1402 is configured to: receive first configuration information from a network device through the communication unit 1403, measure at least one first NCD-SSB, and determine a sending parameter of a first reference signal.

When the apparatus 1401 is configured to implement the function of the terminal device, the processing unit 1402 is further configured to: receive second configuration information of the network device through the communication unit 1403, measure at least one second NCD-SSB, and determine a sending parameter of a third reference signal.

When the apparatus 1401 is configured to implement a function of the network device, the processor 1202 is configured to: obtain first configuration information, and send the first configuration information through the communication unit 1403.

When the apparatus 1401 is configured to implement the function of the network device, the processing unit 1402 is configured to: receive second configuration information of the network device through the communication unit 1403, measure at least one second NCD-SSB, and determine a sending parameter of a third reference signal.

For concepts, explanations, detailed descriptions, and other steps of the communication apparatus that are related to the technical solutions provided in embodiments of this application, refer to descriptions about the content in the foregoing methods or other embodiments. Details are not described herein.

It may be understood that for a function of each unit in the apparatus 1401, refer to implementations of corresponding method embodiments. Details are not described herein again.

It should be understood that division into units of the communication apparatus is merely logical function division. During actual implementation, all or some of the units may be integrated into a physical entity, or may be physically separated. In this embodiment of this application, the communication unit 1403 may be implemented by using the interface 1203 in FIG. 12, and the processing unit 1402 may be implemented by using the processor 1202 in FIG. 12.

According to the methods provided in embodiments of this application, this application further provides a computer program product. The computer program product includes computer program code or instructions. When the computer program code or the instructions are run on a computer, the computer is enabled to perform the method in any one of the embodiments shown in FIG. 7, FIG. 9, FIG. 10, or FIG. 11.

According to the methods provided in embodiments of this application, this application further provides a computer-readable storage medium. The computer-readable medium stores program code. When the program code is run on a computer, the computer is enabled to perform the method in any one of the embodiments shown in FIG. 7, FIG. 9, FIG. 10, or FIG. 11.

According to the methods provided in embodiments of this application, this application further provides a chip system. The chip system may include a processor. The processor is coupled to a memory, and may be configured to perform the method in any one of the embodiments shown in FIG. 7, FIG. 9, FIG. 10, or FIG. 11. Optionally, the chip system further includes the memory. The memory is configured to store a computer program (which may also be referred to as code or instructions). The processor is configured to invoke a computer program from the memory and run the computer program, so that a device on which the chip system is installed performs the method in any one of the embodiments shown in FIG. 7, FIG. 9, FIG. 10, or FIG. 11.

According to the methods provided in embodiments of this application, this application further provides a system, including the foregoing one or more first communication apparatuses.

In a possible implementation, the system may further include one or more second communication apparatuses. In another possible implementation, the system may further include one or more location management apparatuses.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or some of the procedures or functions in embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be noted that a part of this patent application document includes copyright-protected content. Except for making copies of patent documents of the Patent Office or recorded content of patent documents, the copyright owner reserves the copyright.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the Internet interacting with other systems by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit. When the functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applied to a terminal device, and the method comprises:
receiving first configuration information from a network device, wherein the first configuration information comprises configuration information of at least one first non-cell-defining synchronization signal/physical broadcast channel block NCD-SSB and configuration information of a first reference signal, the at least one first NCD-SSB is associated with the first reference signal, and the first reference signal is used to position the terminal device; and
measuring the at least one first NCD-SSB, and determining a sending parameter of the first reference signal.

2. The method according to claim 1, wherein the at least one first NCD-SSB corresponds to at least one cell.

3. The method according to claim 1 or 2, wherein the at least one first NCD-SSB corresponds to one positioning area.

4. The method according to claim 1, wherein the at least one first NCD-SSB corresponds to at least one transmit beam of a same cell, and the at least one first NCD-SSB is sent in a beam sweeping manner.

5. The method according to any one of claims 1 to 4, wherein the sending parameter of the first reference signal comprises at least one of the following:
whether to send the first reference signal; a transmit power of the first reference signal; and transmit timing of the first reference signal.

6. The method according to claim 5, wherein the transmit power of the first reference signal is determined based on an RSRP of the at least one first NCD-SSB.

7. The method according to any one of claims 1 to 6, wherein the first configuration information further comprises configuration information of a second reference signal, the at least one first NCD-SSB is further associated with the second reference signal, and the second reference signal is used to position the terminal device.

8. The method according to any one of claims 1 to 7, wherein the configuration information of the first NCD-SSB comprises at least one of the following: a frequency, a sending periodicity, and a positioning area identifier of the first NCD-SSB.

9. The method according to any one of claims 1 to 8, wherein the method further comprises:
receiving second configuration information of the network device, wherein the second configuration information comprises configuration information of at least one second NCD-SSB and configuration information of a third reference signal, the at least one second NCD-SSB is associated with the third reference signal, and the third reference signal is used to position the terminal device; and
measuring the at least one second NCD-SSB, and determining a sending parameter of the third reference signal.

10. A communication method, wherein the method is applied to a network device, and the method comprises:
obtaining first configuration information, wherein the first configuration information comprises configuration information of at least one first non-cell-defining synchronization signal/physical broadcast channel block NCD-SSB and configuration information of a first reference signal, the at least one first NCD-SSB is associated with the first reference signal, and the first reference signal is used to position the terminal device; and
sending the first configuration information to the terminal device.

11. The method according to claim 10, wherein the at least one first NCD-SSB corresponds to at least one cell.

12. The method according to claim 10 or 11, wherein the at least one first NCD-SSB corresponds to one positioning area.

13. The method according to claim 10, wherein the at least one first NCD-SSB corresponds to at least one transmit beam of a same cell, and the at least one first NCD-SSB is sent in a beam sweeping manner.

14. The method according to any one of claims 10 to 13, wherein a sending parameter of the first reference signal comprises at least one of the following:
whether to send the first reference signal; a transmit power of the first reference signal; and transmit timing of the first reference signal.

15. The method according to claim 14, wherein the transmit power of the first reference signal is determined based on an RSRP of the at least one first NCD-SSB.

16. The method according to any one of claims 10 to 15, wherein the first configuration information further comprises configuration information of a second reference signal, the at least one first NCD-SSB is further associated with the second reference signal, and the second reference signal is used to position the terminal device.

17. The method according to any one of claims 10 to 16, wherein the first configuration information comprises at least one of the following: a frequency, a sending periodicity, and a positioning area identifier of the first NCD-SSB.

18. The method according to any one of claims 10 to 17, wherein the method further comprises:
sending second configuration information to the terminal device, wherein the second configuration information comprises configuration information of at least one second NCD-SSB and configuration information of a third reference signal, the at least one second NCD-SSB is associated with the third reference signal, and the third reference signal is used to position the terminal device.

19. A communication apparatus, wherein the apparatus comprises a processor and an interface, wherein
the processor is configured to:
receive first configuration information from a network device through the interface, wherein the first configuration information comprises configuration information of at least one first non-cell-defining synchronization signal/physical broadcast channel block NCD-SSB and configuration information of a first reference signal, the at least one first NCD-SSB is associated with the first reference signal, and the first reference signal is used to position the communication apparatus; and
measure the at least one first NCD-SSB, and determine a sending parameter of the first reference signal.

20. The apparatus according to claim 19, wherein the at least one first NCD-SSB corresponds to at least one cell.

21. The apparatus according to claim 19 or 20, wherein the at least one first NCD-SSB corresponds to one positioning area.

22. The apparatus according to claim 19, wherein the at least one first NCD-SSB corresponds to at least one transmit beam of a same cell, and the at least one first NCD-SSB is sent in a beam sweeping manner.

23. The apparatus according to any one of claims 19 to 22, wherein the sending parameter of the first reference signal comprises at least one of the following:
whether to send the first reference signal; a transmit power of the first reference signal; and transmit timing of the first reference signal.

24. The apparatus according to claim 23, wherein the transmit power of the first reference signal is determined based on an RSRP of the at least one first NCD-SSB.

25. The apparatus according to any one of claims 19 to 24, wherein the first configuration information further comprises configuration information of a second reference signal, the at least one first NCD-SSB is further associated with the second reference signal, and the second reference signal is used to position the communication apparatus.

26. The apparatus according to any one of claims 19 to 25, wherein the configuration information of the first NCD-SSB comprises at least one of the following: a frequency, a sending periodicity, and a positioning area identifier of the first NCD-SSB.

27. The apparatus according to any one of claims 19 to 26, wherein the apparatus further comprises:
receiving second configuration information of the network device, wherein the second configuration information comprises configuration information of at least one second NCD-SSB and configuration information of a third reference signal, the at least one second NCD-SSB is associated with the third reference signal, and the third reference signal is used to position the communication apparatus; and
measuring the at least one second NCD-SSB, and determining a sending parameter of the third reference signal.

28. A communication apparatus, wherein the apparatus comprises a processor and an interface, wherein
the processor is configured to:
obtain first configuration information, wherein the first configuration information comprises configuration information of at least one first non-cell-defining synchronization signal/physical broadcast channel block NCD-SSB and configuration information of a first reference signal, the at least one first NCD-SSB is associated with the first reference signal, and the first reference signal is used to position the terminal device; and
send the first configuration information to the terminal device through the interface.

29. The apparatus according to claim 28, wherein the at least one first NCD-SSB corresponds to at least one cell.

30. The apparatus according to claim 28 or 29, wherein the at least one first NCD-SSB corresponds to one positioning area.

31. The apparatus according to claim 28, wherein the at least one first NCD-SSB corresponds to at least one transmit beam of a same cell, and the at least one first NCD-SSB is sent in a beam sweeping manner.

32. The apparatus according to any one of claims 28 to 31, wherein a sending parameter of the first reference signal comprises at least one of the following:
whether to send the first reference signal; a transmit power of the first reference signal; and transmit timing of the first reference signal.

33. The apparatus according to claim 32, wherein the transmit power of the first reference signal is determined based on an RSRP of the at least one first NCD-SSB.

34. The apparatus according to any one of claims 28 to 33, wherein the first configuration information further comprises configuration information of a second reference signal, the at least one first NCD-SSB is further associated with the second reference signal, and the second reference signal is used to position the terminal device.

35. The apparatus according to any one of claims 28 to 34, wherein the first configuration information comprises at least one of the following: a frequency, a sending periodicity, and a positioning area identifier of the first NCD-SSB.

36. The apparatus according to any one of claims 28 to 35, wherein the processor is further configured to:
send second configuration information to the terminal device through the interface, wherein the second configuration information comprises configuration information of at least one second NCD-SSB and configuration information of a third reference signal, the at least one second NCD-SSB is associated with the third reference signal, and the third reference signal is used to position the terminal device.

37. A communication apparatus, comprising a processor and a memory, wherein
the memory is configured to store a computer program or instructions; and
the processor is configured to execute the computer program or the instructions in the memory, to perform the method according to any one of claims 1 to 18.

38. A communication apparatus, comprising a processing unit and a communication unit, wherein the processing unit is configured to perform the method according to any one of claims 1 to 18 through the communication unit.

39. A computer-readable storage medium, wherein the computer-readable storage medium stores computer-executable instructions, and when the computer-executable instructions are invoked by a computer, the method according to any one of claims 1 to 18 is performed.

40. A chip system, wherein the chip system comprises at least one processor and an interface circuit, the interface circuit and the at least one processor are interconnected through a line, and the processor performs the method according to any one of claims 1 to 18 by running instructions.

41. A computer program product, wherein the computer program product stores a computer program, the computer program comprises program instructions, and when the program instructions are executed by a computer, the computer is enabled to perform the method according to any one of claims 1 to 18.
